# FASCICULE DE BREVET EUROPEEN

(11) **EP 2 933 178 B1**
(45) Date de publication et mention de la délivrance du brevet: **24.08.2016**
(21) Numéro de dépôt: 14195475.0
(22) Date de dépôt: 28.11.2014
(51) Int. Cl.: B62K 19/32, B62K 21/06

(54) **Dispositif de guidage d'un organe de liaison souple passant à l intérieur d'un cadre de cycle**
Lenkvorrichtung eines flexiblen Verbindungsorgans, das in einem Radrahmen verläuft
Device for guiding a flexible connecting member passing through the inside of a cycle frame

(30) Priorité: 18.04.2014 FR 1453529
(43) Date de publication de la demande: 21.10.2015
(73) Titulaire: Look Cycle International, 58000 Nevers (FR)
(72) Inventeur: Lanz, Matthieu, 58000 NEVERS (FR)
(74) Mandataire: Petit, Maxime

(56) Documents cités:
- CN-U- 201 604 757
- DE-U1-202013 005 555
- US-A1- 2013 076 000

## Description

La présente invention concerne un dispositif de guidage d'un organe de liaison souple passant à l'intérieur d'un cadre de cycle pour relier un organe de commande porté par un cintre de cycle à un récepteur.

Les freins et les dérailleurs de cycle sont en général commandés par le cycliste à l'aide d'organes de commande portés par le cintre du cycle. Pour l'actionnement respectivement des freins ou des dérailleurs, les organes de commande sont reliés à ceux-ci par un organe de liaison souple qui de manière classique comporte un câble fixé au cadre du cycle. Il s'agit ici de moyens de commande entièrement mécaniques.

Il existe à ce jour également des moyens de commande électromécaniques à batterie, en particulier pour la commande d'un dérailleur de cycle, et dans ce cas, les organes de commande sont reliés à un récepteur électrique par l'intermédiaire de moyens de liaison sous forme de fils électriques.

Il existe en outre des moyens de commande hydrauliques, en particulier pour la commande d'un frein hydraulique, et dans ce cas, les organes de commande sont reliés à un récepteur hydraulique par l'intermédiaire de moyens de liaison sous forme de tuyaux du type Durit^{©}, en général en caoutchouc renforcé de nappes textiles ou métallique.

Tous ces moyens de commande nécessitent ainsi l'emploi d'organes de liaison sous forme de câbles, de fils électriques ou de tuyaux.

Au lieu de fixer ces organes de liaison de manière classique sur les faces extérieures du cadre de cycle, les fabricants de cycle d'aujourd'hui choisissent souvent de faire passer ces organes de liaison, dans la mesure du possible, à l'intérieur des tubes différents dont est composé le cadre de cycle. On obtient ainsi un produit final qui est plus aérodynamique, plus esthétique et dans lequel les organes de liaison sont bien protégés.

Cependant, il existe toujours une zone critique qui est l'avant du cycle car pratiquement tous les organes de liaison partant des organes de commande portés par le cintre entrent dans la partie avant du cadre pour passer dans certains des éléments tubulaires de celui-ci. A cet égard, l'organe de liaison que relie l'organe de commande du frein avant à celui-ci passe dans le cas d'un frein intégré dans la fourche avantageusement à l'intérieur de la potence de cycle et ensuite dans le pivot de fourche pour atteindre le frein.

Les autres organes de liaison partant du cintre entrent plus loin dans le cadre par une ouverture respective, souvent latérale, prévue près de l'extrémité avant soit du tube horizontal du cadre, soit du tube diagonal du cadre, en fonction de l'emplacement de l'organe à commander.

D'une manière générale, une douille de direction faisant partie du cadre de cycle, et le tube de pivot de fourche qui y est installé ne laissent pas beaucoup de place pour le passage des organes de liaison. A cet égard, il doit être noté que les fils électriques sont facilement intégrables du fait qu'ils sont très souples et de petit diamètre. Cela contrairement aux câbles et aux tuyaux qui ne peuvent pas avoir des rayons de courbure très petits. La notion de douille de direction doit être comprise dans son sens large comme étant un élément tubulaire apte à recevoir un jeu de direction et à être traversé par un pivot de fourche.

Le document DE 20 2013 005 555 U1 décrit un dispositif de guidage d'un organe de liaison souple passant par un tube d'un cadre de cycle, en particulier une douille de direction. Ce dispositif comprend un insert sous forme d'une plaque intégré sur un côté de la douille de direction. Cet insert est reçu dans une découpe sensiblement à mi-hauteur de la douille de direction. L'insert est fixé dans la découpe à l'aide d'une vis et il présente plusieurs canaux pour le passage d'éléments fonctionnels tels que des câbles Bowden. Les canaux débouchent vers l'extérieur sur des ouvertures d'entrée des éléments fonctionnels.

Un inconvénient de ce dispositif est qu'il nécessite une douille de direction présentant une largeur relativement importante pour offrir un espace suffisamment grand pour l'intégration de ce dispositif qui est encombrant en largeur. Pour la même raison, ce dispositif ne peut pas être disposé en haut à proximité d'un roulement supérieur du jeu de direction disposé dans la douille de direction, alors qu'il serait préférable de pouvoir faire entrer les organes de liaison dans le cadre le plus haut possible pour réduire la longueur des organes de liaison à l'extérieur du cadre de cycle au minimum, entre les organes de commande et les ouvertures d'entrée dans le cadre.

Le but de l'invention est de proposer un dispositif de guidage d'un organe de liaison souple passant à l'intérieur d'un cadre de cycle qui est apte à remédier aux inconvénients des dispositifs connus. Le dispositif de guidage selon l'invention permet de cacher dans le cadre une longueur maximum des organes de liaison pour un meilleur aérodynamisme et une meilleure intégration, et d'affiner la partie de la douille de direction qui se trouve entre le roulement supérieur et le roulement inférieur du jeu de direction pour ainsi réduire la surface frontale du cycle. Autrement dit, grâce au dispositif de guidage selon l'invention, les parois intérieures de la douille de direction peuvent dans une zone centrale de celui-ci être très proches du tube pivot de fourche.

L'objet de l'invention est un dispositif de guidage d'un organe de liaison souple passant à l'intérieur d'un cadre de cycle pour relier un organe de commande porté par un cintre de cycle à un récepteur, ledit organe de liaison entrant dans le cadre de cycle par une ouverture d'entrée prévue sur une douille de direction, le dispositif de guidage formant un insert pouvant être intégré à la douille de direction et comportant au moins un canal de guidage dudit organe de liaison destiné à communiquer avec ladite ouverture d'entrée, caractérisé en ce que ledit insert est apte à être disposé à l'intérieur de la douille de direction dans un logement commun avec un roulement dit supérieur d'un jeu de direction, ledit insert présentant une face dite intérieure apte à contourner au moins partiellement un pivot de fourche inséré dans la douille de direction, et une face dite extérieure contenant ledit canal de guidage.

Selon d'autres caractéristiques de l'invention :
- ledit insert présente une forme globalement en arc de cercle.
- ledit insert forme un cercle fermé ;
- ledit insert est sur sa périphérie pourvu de moyens de blocage en rotation par rapport à la douille de direction ;
- lesdits moyens de blocage en rotation comportent au moins une conformation non circulaire coopérant avec une surface de forme complémentaire prévue dans ledit logement commun ;
- ledit insert est en deux parties formant ensemble ledit cercle fermé ;
- les deux parties de l'insert sont prolongées vers le bas et présentent à la partie inférieure de leur face intérieure un évidement formant une cuvette de réception dudit roulement supérieur ;
- ledit insert est en une seule pièce annulaire formant ledit cercle fermé ;
- ledit insert est disposé au-dessus dudit roulement supérieur, à l'extérieur d'un capot taraudé coopérant avec un filetage prévu à la partie haute d'un pivot de fourche inséré dans la douille de direction ;
- ledit insert est disposé en-dessous dudit roulement supérieur ;
- ladite ouverture d'entrée est aménagée dans une protubérance dirigée vers l'avant à l'extrémité haute de la douille de direction ; et
- plusieurs canaux de guidage parallèles les uns par rapport aux autres sont prévus sur ladite face extérieure de l'insert, et un nombre correspondant d'ouvertures d'entrée sont prévues à la partie haute de la douille de direction, au niveau d'un canal de guidage respectif lorsque ledit insert se trouve dans ledit logement commun.

D'autres caractéristiques et avantages de l'invention ressortiront de la description qui va suivre d'un mode de réalisation non limitatif de l'invention, en référence aux figures annexées dans lesquelles :
- la figure 1 est une vue en perspective schématique montrant la partie avant haute d'un cycle dont la douille de direction est pourvu d'un dispositif de guidage selon l'invention ;
- la figure 2 est une vue éclatée en perspective montrant la partie haute d'une douille de direction et un roulement supérieur associé à un dispositif de guidage selon l'invention ;
- la figure 3 est une vue éclatée en perspective montrant les organes de guidage d'un dispositif de guidage en deux parties selon l'invention ;
- la figure 4 est une vue en perspective montrant une variante d'un organe de guidage ;
- la figure 5 est une vue schématique latérale en coupe d'une douille de direction pourvu du dispositif de guidage selon l'invention ;
- la figure 6 est une vue schématique en coupe de devant illustrant le dispositif de guidage des figures 2, 3 et 5 dans laquelle la partie inférieure de l'organe de guidage forme une cuvette recevant un roulement supérieur d'un jeu de direction;
- la figure 7 est une vue schématique en coupe de devant illustrant une variante du dispositif de guidage selon l'invention disposé en dessous d'un roulement supérieur d'un jeu de direction ;
- la figure 8 est une vue schématique en coupe de devant illustrant l'organe de guidage selon l'invention disposé immédiatement au-dessus d'un roulement supérieur d'un jeu de direction ; et
- la figure 9 est une vue partielle en perspective de dessus montrant le logement commun du roulement supérieur et du dispositif de guidage selon l'invention.

Dans les figures, les éléments identiques ou équivalents porteront les mêmes signes de référence.

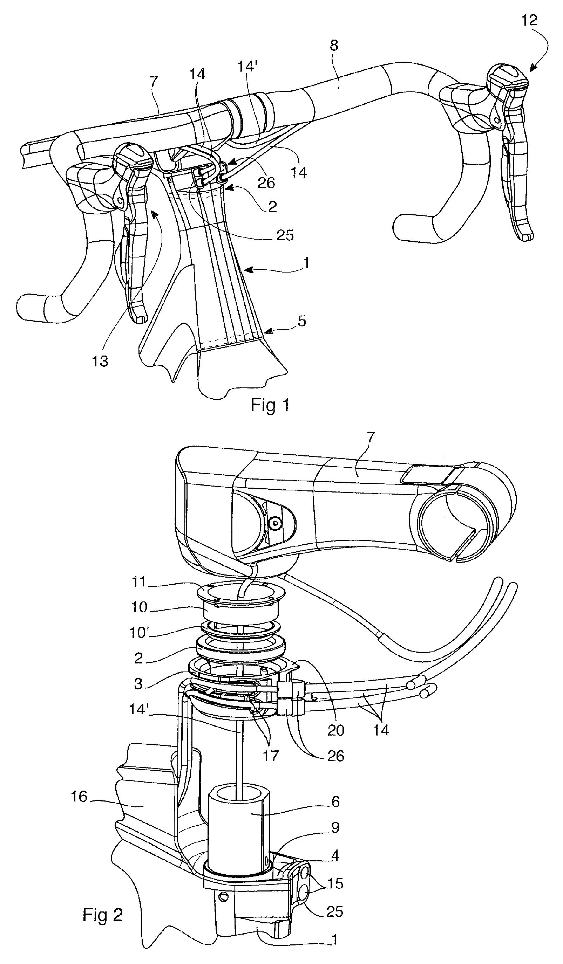

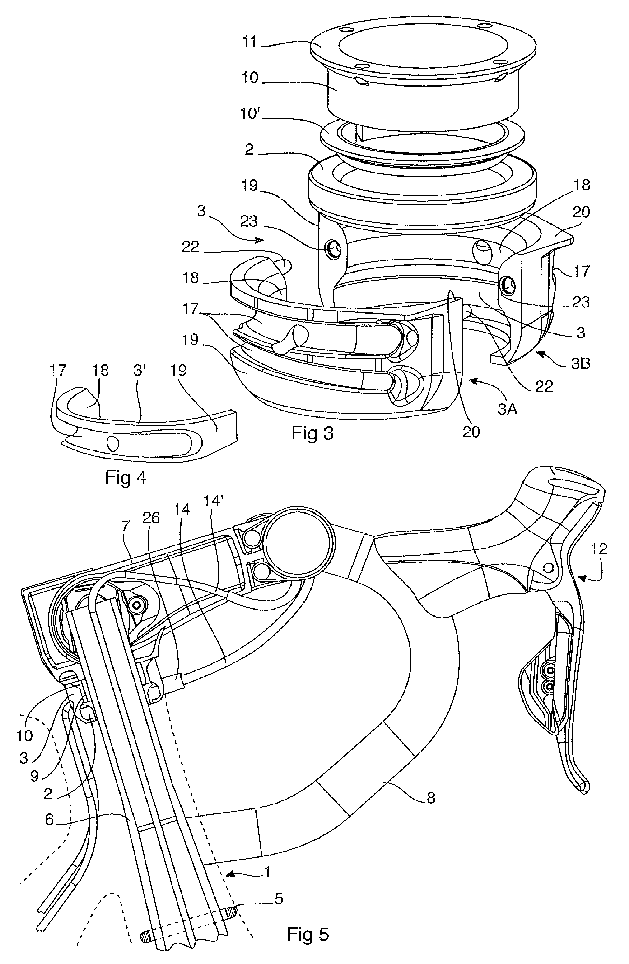

La figure 2 montre dans une vue éclatée la partie haute d'une douille de direction 1 et un roulement supérieur 2 associé à un dispositif de guidage 3 selon l'invention. Le roulement supérieur 2 fait partie d'un jeu de direction et doit être placé dans un logement 4 prévu à l'extrémité haute de la douille de direction 1. Un roulement inférieur 5 (montré schématiquement à la figure 5) est reçu dans un logement analogue à l'extrémité basse de la douille de direction 1. Pour plus de détails au sujet du jeu de direction, référence est faite à la demande FR 2 954 266 de la demanderesse.

Un tube de pivot de fourche 6 traverse la douille de direction 1 en faisant saillie vers le haut pour être relié à l'extrémité arrière d'une potence 7 qui à son extrémité avant porte un cintre 8.

Le tube de pivot de fourche 6 est à sa partie supérieure pourvu d'une collerette filetée 9 qui peut être sous forme d'une douille fixée sur le tube de pivot de fourche. La collerette filetée est destinée à coopérer avec un capot taraudé 10 pourvu d'une bride 11 de manière à obtenir un serrage axial en plaquant les roulements 2 et 5 contre leur logement respectif 4. Une bague de compression 10' de forme conique est insérée entre le roulement supérieur 2 et la bride 11 du capot taraudé 10 pour coopérer avec une surface de forme correspondante du roulement 2.

Le cintre 8 porte des organes de commande 12, 13 permettant au cycliste de commander les freins avant et arrière (non représentés), et avantageusement aussi le dérailleur (non représenté). Les organes de commande 12, 13 sont reliés aux dispositifs devant être commandés par l'intermédiaire d'organes de liaison 14 souple sous forme de câbles, de fils électriques ou de tuyaux en fonction du mode de commande, comme cela a été expliqué ci-dessus.

Un de ces organes de liaison désigné 14' (voir figure 5) quitte le cintre pour entrer, d'une manière en soi connue, directement dans la potence 7 pour ensuite traverser le tube pivot de fourche 6 pour la commande du frein avant.

Les autres organes de liaison souple 14 entrent dans le cadre de cycle par une ouverture respective 15 prévue sur la face avant de la douille de direction 1.

Le dispositif de guidage 3 selon l'invention sert à guider un ou plusieurs organes de liaison souple 14 à l'intérieur de la douille de direction 1 pour ensuite passer par le tube horizontal 16 ou le tube diagonal (non représenté) de celui-ci.

Le dispositif de guidage 3 forme un insert intégré à la douille de direction 1 et comportant au moins un canal de guidage 17 (voir figure 3) apte à recevoir un organe de liaison souple 14 et communiquant avec l'ouverture d'entrée 15.

Selon l'invention, l'insert 3 est apte à être disposé à l'intérieur de la douille de direction 1 dans le logement 4 qui est un logement commun à l'insert et au roulement supérieur 2 du jeu de direction.

L'insert 3 présente une forme en arc de cercle dont une face dite intérieure 18 est apte à entourer au moins partiellement un pivot de fourche 6 inséré dans la douille de direction 1, et dont une face dite extérieure 19 présente de préférence une rainure formant le canal de guidage 17. Cependant, ce canal de guidage peut également être fermée vers l'extérieure par une peau mince, par exemple d'une épaisseur d'environ 1 mm.

Dans l'exemple illustré aux figures 2 à 3 et 5 à 8, l'insert 3 forme un cercle fermé, sous forme d'anneau ou cylindre. L'insert 3 est sur sa périphérie pourvu de moyens de blocage en rotation par rapport à la douille de direction 1. Ces moyens de blocage en rotation comportent de préférence au moins une conformation non circulaire tel qu'un méplat 20 coopérant avec une surface de forme complémentaire 21 prévue dans le logement 4.

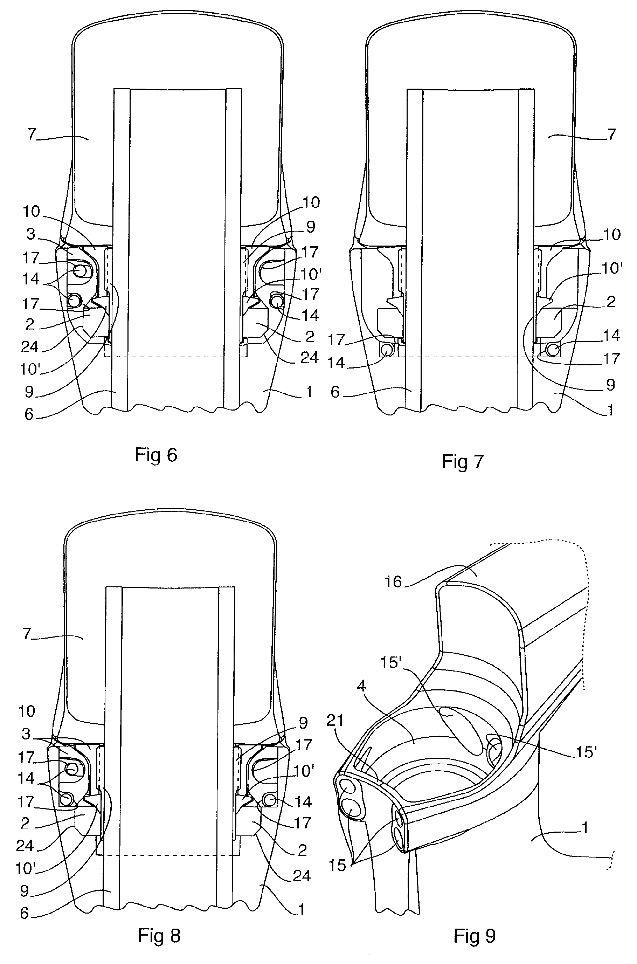

Dans un mode de réalisation, l'insert 3 est en une seule pièce annulaire formant un cercle fermé. Il peut être disposé au-dessus du roulement 2 en s'étendant autour du capot taraudé 10 et de la bague de compression 10', comme cela est illustré à la figure 8. Il peut également être disposé en-dessous du roulement 2, comme cela est illustré à la figure 7.

Les figures 2, 3, 5 et 6 montrent un mode de réalisation avantageux dans lequel l'insert 3 est en deux parties, à savoir une première partie 3A et une deuxième partie 3B (voir en particulier figure 3). Les première et deuxième parties 3A, 3B sont globalement semi-circulaires et sont dans leur plan de jonction pourvues de pions 22 respectivement de trous de réception 23 recevant les pions 22 lorsque les deux parties sont jointes.

Selon une caractéristique de l'invention, les deux parties 3A, 3B de l'insert 3 sont prolongées vers le bas et présentent à la partie inférieure de leur face intérieure un évidement (voir figures 2, 5 et 6) formant une cuvette de réception du roulement supérieure 2.

Selon une caractéristique de l'invention, une ouverture d'entrée 15 est aménagée dans une protubérance 25 dirigée vers l'avant à l'extrémité haute de la douille de direction 1, au niveau du canal de guidage 17 lorsque le dispositif de guidage 3 se trouve dans le logement 4.

La figure 4 montre un dispositif de guidage 3' selon l'invention formé par un élément globalement semi-circulaire formant un insert comportant un seul canal de guidage 17. Cet insert peut être disposé d'un seul côté dans le logement 4 ou bien être doublé pour former un cercle fermé présentant deux canaux de guidage opposés. Bien entendu, cet insert peut également être annulaire avec deux canaux opposés.

Les figures 2, 3, 5 à 6 et 8 montrent un mode de réalisation avantageux de l'insert 3 comportant plusieurs canaux de guidage parallèles 17, et un nombre correspondant d'ouvertures d'entrée 15 prévues à la partie haute de la douille de direction 1 et disposées de façon à communiquer avec un canal respectif de l'insert 3 lorsque celui-ci est mis en place dans la douille de direction.

Dans le logement 4, des ouvertures de sortie 15' pour les organes de liaison souple 14 sont prévues sensiblement à l'opposé des ouvertures d'entrée 15.

Chaque organe de liaison souple 14 est avantageusement pourvu d'un manchon 26 qui doit être inséré dans l'ouverture d'entrée 15 pour former une butée et pour assurer l'étanchéité de l'ouverture.

Ainsi est obtenu un dispositif de guidage facilement intégrable dans une douille de direction au niveau du palier supérieur d'un jeu de direction disposé dans la douille de direction. Grâce à l'invention, les ouvertures d'entrée d'organes de liaison souple s'étendant à partir d'un organe de commande porté par un cintre de cycle peuvent être placées immédiatement en-dessous de la potence de cycle et la longueur des organes de liaison à l'extérieur du cadre de cycle se trouve sensiblement réduite.

Un autre avantage de l'invention est que la largeur de la partie de la douille de direction s'étendant entre le roulement supérieur et le roulement inférieur peut être sensiblement réduite, ce qui donne des avantages aérodynamiques et esthétiques.

Bien entendu, l'invention n'est pas limitée aux exemples illustrés et décrits, mais un grand nombre de variantes et de combinaisons peut être envisagé sans pour autant sortir du cadre de l'invention.

## Revendications

1. Dispositif de guidage d'un organe de liaison souple (14) passant à l'intérieur d'un cadre de cycle pour relier un organe de commande (12, 13) porté par un cintre de cycle (8) à un récepteur, ledit organe de liaison (14) entrant dans le cadre de cycle par une ouverture d'entrée (15) prévue sur une douille de direction (1), le dispositif de guidage (3, 3') formant un insert pouvant être intégré à la douille de direction (1) et comportant au moins un canal de guidage (17) dudit organe de liaison (14) destiné à communiquer avec ladite ouverture d'entrée (15), **caractérisé en ce que** ledit insert (3) est apte à être disposé à l'intérieur de la douille de direction (1) dans un logement commun (4) avec un roulement dit supérieur (2) d'un jeu de direction, ledit insert (3, 3') présentant une face dite intérieure (18) apte à contourner au moins partiellement un pivot de fourche (6) inséré dans la douille de direction (1), et une face dite extérieure (19) contenant ledit canal de guidage (17).

2. Dispositif de guidage selon la revendication 1, **caractérisé en ce que** ledit insert présente une forme globalement en arc de cercle.

3. Dispositif de guidage selon la revendication 2, **caractérisé en ce que** ledit insert (3) forme un cercle fermé.

4. Dispositif de guidage selon l'une quelconque des revendications précédentes, **caractérisé en ce que** ledit insert (3) est sur sa périphérie pourvu de moyens de blocage en rotation par rapport à la douille de direction (1).

5. Dispositif de guidage selon la revendication 4, **caractérisé en ce que** lesdits moyens de blocage en rotation comportent au moins une conformation non circulaire (20) coopérant avec une surface de forme complémentaire (21) prévue dans ledit logement commun (4).

6. Dispositif de guidage selon l'une quelconque des revendications précédentes, **caractérisé en ce que** ledit insert (3) est en deux parties (3A, 3B) formant ensemble ledit cercle fermé.

7. Dispositif de guidage selon la revendication 6, **caractérisé en ce que** les deux parties (3A, 3B) de l'insert (3) sont prolongées vers le bas et présentent à la partie inférieure de leur face intérieure un évidement (24) formant une cuvette de réception dudit roulement supérieur (2).

8. Dispositif de guidage selon l'une quelconque des revendications 2 à 5, **caractérisé en ce que** ledit insert (3) est en une seule pièce annulaire formant ledit cercle fermé.

9. Dispositif de guidage selon l'une quelconque des revendications 1 à 8, **caractérisé en ce que** ledit insert (3) est disposé au-dessus dudit roulement supérieur (2), à l'extérieur d'un capot taraudé (10) coopérant avec un filetage (9) prévu à la partie haute d'un pivot de fourche (6) inséré dans la douille de direction (1).

10. Dispositif de guidage la revendication 8, **caractérisé en ce que** ledit insert (3) est disposé en-dessous dudit roulement supérieur (2).

11. Dispositif de guidage selon l'une quelconque des revendications précédentes, **caractérisé en ce que** ladite ouverture d'entrée (15) est aménagée dans une protubérance (25) dirigée vers l'avant à l'extrémité haute de la douille de direction (1).

12. Dispositif de guidage selon l'une quelconque des revendications précédentes, **caractérisé en ce que** plusieurs canaux de guidage (17) parallèles les uns par rapport aux autres sont prévus sur ladite face extérieure (19) de l'insert (3), et qu'un nombre correspondant d'ouvertures d'entrée (15) sont prévues à la partie haute de la douille de direction (1), au niveau d'un canal de guidage (17) respectif lorsque ledit insert (3) se trouve dans ledit logement commun (4).

## Patentansprüche

1. Lenkvorrichtung eines flexiblen Verbindungsorgans (14), das im Innern eines Radrahmens verläuft, um ein von einem Radbogen (8) getragenes Steuerorgan (12, 13) mit einem Empfänger zu verbinden, wobei das Verbindungsorgan (14) in den Radrahmen durch eine Eingangsöffnung (15) eintritt, die auf einer Lenkhülse (1) vorgesehen ist, wobei die Lenkvorrichtung (3, 3') einen Einsatz bildet, der in die Lenkhülse (1) integrierbar ist und mindestens einen Führungskanal (17) des Verbindungsorgans (14) aufweist, der bestimmt ist, mit der Eingangsöffnung (15) zu kommunizieren, **dadurch gekennzeichnet, dass** der Einsatz (3) imstande ist, im Innern der Lenkhülse (1) in einer gemeinsamen Aufnahme (4) mit einem oberen Wälzlager (2) eines Lenkungssets angeordnet zu sein, wobei der Einsatz (3, 3') eine Innenfläche (18), die imstande ist, einen in die Lenkhülse (1) eingesetzten Gabelzapfen (6) mindestens teilweise zu umgeben, und eine Außenfläche (19), die den Führungskanal (17) enthält, aufweist.

2. Lenkvorrichtung nach Anspruch 1, **dadurch gekennzeichnet, dass** der Einsatz eine Form aufweist, die allgemein wie ein Kreisbogen ist.

3. Lenkvorrichtung nach Anspruch 2, **dadurch gekennzeichnet, dass** der Einsatz (3) einen geschlossenen Kreis bildet.

4. Lenkvorrichtung nach einem der vorangehenden Ansprüche, **dadurch gekennzeichnet, dass** der Einsatz (3) auf seinem Umfang mit Rotationsblockiermitteln in Bezug zu der Lenkhülse (1) ausgestattet ist.

5. Lenkvorrichtung nach Anspruch 4, **dadurch gekennzeichnet, dass** die Rotationsblockiermittel mindestens eine nicht kreisförmige Konformation (20) aufweisen, die mit einer komplementär geformten Fläche (21) zusammenwirkt, die in der gemeinsamen Aufnahme (4) vorgesehen ist.

6. Lenkvorrichtung nach einem der vorangehenden Ansprüche, **dadurch gekennzeichnet, dass** der Einsatz (3) aus zwei Teilen (3A, 3B) ist, die gemeinsam den geschlossenen Kreis bilden.

7. Lenkvorrichtung nach Anspruch 6, **dadurch gekennzeichnet, dass** die zwei Teile (3A, 3B) des Einsatzes (3) nach unten verlängert sind und im unteren Teil ihrer Unterseite eine Aussparung (24) aufweisen, die eine Aufnahmeschale für das obere Wälzlager (2) bilden.

8. Lenkvorrichtung nach einem der Ansprüche 2 bis 5, **dadurch gekennzeichnet, dass** der Einsatz (3) aus einem einzigen ringförmigen Teil ist, das den geschlossenen Kreis bildet.

9. Lenkvorrichtung nach einem der Ansprüche 1 bis 8, **dadurch gekennzeichnet, dass** der Einsatz (3) über dem oberen Wälzlager (2) außerhalb einer gewindeten Kappe (10) angeordnet ist, die mit einem Gewinde (9) zusammenwirkt, das im oberen Teil eines in die Lenkhülse (1) eingesetzten Gabelzapfens (6) vorgesehen ist.

10. Lenkvorrichtung nach Anspruch 8, **dadurch gekennzeichnet, dass** der Einsatz (3) unter dem oberen Wälzlager (2) angeordnet ist.

11. Lenkvorrichtung nach einem der vorangehenden Ansprüche, **dadurch gekennzeichnet, dass** die Eingangsöffnung (15) in einem Vorsprung (25) ausgebildet ist, der am oberen Ende der Lenkhülse (1) nach vorn zeigt.

12. Lenkvorrichtung nach einem der vorangehenden Ansprüche, **dadurch gekennzeichnet, dass** mehrere zueinander parallele Führungskanäle (17) auf der Außenseite (19) des Einsatzes (3) vorgesehen sind und dass eine entsprechende Anzahl von Eingangsöffnungen (15) im oberen Teil der Lenkhülse (1) im Bereich eines jeweiligen Führungskanals (17) vorgesehen ist, wenn sich der Einsatz (3) in der gemeinsamen Aufnahme (4) befindet.

## Claims

1. A guide device for a flexible connecting member (14) passing inside a bicycle frame to connect a control member (12, 13) supported by a bicycle handlebar (8) to a receiver, said connecting member (14) entering the bicycle frame through an inlet opening (15) provided on a head tube (1), the guide device (3, 3') forming an insert that can be integrated into the head tube (1) and including at least one guide channel (17) for said connecting member (14) intended to communicate with said inlet opening (15), **characterized in that** said insert (3) is able to be positioned inside the head tube (1) in a common housing (4) with a so-called upper rolling bearing (2) of a headset, said insert (3, 3') having a so-called inner face (18) able to at least partially bypass a steerer tube (6) inserted in the head tube (1), and a so-called outer face (19) containing said guide channel.

2. The guide device according to claim 1, **characterized in that** said insert has a globally arc of circle shape.

3. The guide device according to claim 2, **characterized in that** said insert (3) forms a closed circle.

4. The guide device according to any one of the preceding claims, **characterized in that** said insert (3) is provided on its periphery with rotational blocking means relative to the head tube (1).

5. The guide device according to claim 4, **characterized in that** said rotational blocking means include at least one noncircular configuration (20) cooperating with a surface (21) with a complementary shape provided in said common housing (4).

6. The guide device according to any one of the preceding claims, **characterized in that** said insert (3) is made in two parts (3A, 3B) together forming said closed circle.

7. The guide device according to claim 6, **characterized in that** the two parts (3A, 3B) of the insert (3) are extended downward and have, at the lower part of their inner face, a recess (24) forming a basin for receiving said upper rolling bearing (2).

8. The guide device according to any one of claims 2 to 5, **characterized in that** said insert (3) is made in a single annular piece forming said closed circle.

9. The guide device according to any one of claims 1 to 8, **characterized in that** said insert (3) is positioned above said upper rolling bearing (2), outside a tapped cover (10) cooperating with a threading (9) provided in the upper part of a steerer tube (6) inserted in the head tube (1).

10. The guide device according to claim 8, **characterized in that** said insert (3) is positioned below said upper rolling bearing (2).

11. The guide device according to any one of the preceding claims, **characterized in that** said inlet opening (15) is arranged in a protuberance (25) oriented forward at the upper end of the head tube (1).

12. The guide device according to any one of the preceding claims, **characterized in that** several guide channels (17) parallel to one another are provided on said outer face (19) of the insert (3), and **in that** a corresponding number of inlet openings (15) are provided in the upper part of the head tube (1), at a respective guide channel (17) when said insert (3) is in said common housing (4).
